# EUROPÄISCHE PATENTSCHRIFT

(11) **EP 1 158 618 B1**
(45) Veröffentlichungstag und Bekanntmachung des Hinweises auf die Patenterteilung: **22.10.2003**
(21) Anmeldenummer: 01111719.9
(22) Anmeldetag: 15.05.2001
(51) Int. Cl.: H01R 13/03

(54) **Elektrisch leitfähiges Metallband und Steckverbinder hieraus**
Metal strip with high electric conductibility and connector made from it
Bande métallique à haute conductibilité électrique et connecteur fabriqué avec ce produit

(30) Priorität: 20.05.2000 DE 10025106
(43) Veröffentlichungstag der Anmeldung: 28.11.2001
(73) Patentinhaber: STOLBERGER METALLWERKE GMBH & CO. KG, D-52222 Stolberg (DE)
(72) Erfinder: Schleicher, Klaus, 52222 Stolberg (DE); Leffers, Robert, 41236 Mönchengladbach (DE); Helmenkamp, Thomas, 49084 Osnabrück (DE); Gebhardt, Jürgen, Dr., 49086 Osnabrück (DE); Adler, Udo, 52249 Eschweiler (DE)

(56) Entgegenhaltungen:
- EP-A- 0 440 548
- EP-A- 0 443 291
- DE-A- 4 338 769
- DE-C- 4 443 461
- US-A- 5 849 424
- US-A- 6 040 067
- PATENT ABSTRACTS OF JAPAN vol. 1998, no. 08, 30. Juni 1998 (1998-06-30) -& JP 10 060562 A (FURUKAWA ELECTRIC CO LTD:THE), 3. März 1998 (1998-03-03)

## Beschreibung

Die Erfindung betrifft ein elektrisch leitfähiges Metallband zur Fertigung von elektrischen Kontaktbauteilen sowie einen Steckverbinder hieraus.

Steckkontaktverbindungen sind in elektrotechnischen Anwendungen weit verbreitet. Man versteht hierunter grundsätzlich eine mechanische Anordnung aus Stecker und Steckerhülse zum Öffnen und Schließen einer elektrisch leitenden Verbindung. Steckkontaktverbindungen kommen in unterschiedlichsten Anwendungsbereichen zum Einsatz, beispielsweise in der Kraftfahrzeugelektrik, der Nachrichtentechnik oder der Industrieanlagenelektronik.

Ein übliches Fertigungsverfahren derartiger Steckkontaktelemente ist, Rohlinge aus einem Kupfer- bzw. einem Kupferlegierungsband auszustanzen und diese zum Steckkontaktelement weiter zu verarbeiten. Kupfer hat eine hohe elektrische Leitfähigkeit. Zum Schutz gegen Korrosion und Verschleiß sowie zur Erhöhung der Oberflächenhärte werden die Kupfer- bzw. Kupferlegierungsbänder vorab verzinnt. Zinn eignet sich wegen seiner guten Korrosionsbeständigkeit besonders als Überzugsmaterial für Kupfer. Zum technischen Standard zählt der Auftrag der Beschichtung im Schmelztauchverfahren.

in diesem Zusammenhang sind unterschiedlichste Zinnlegierungen zur Oberflächenbeschichtung des Basiswerkstoffs bekannt, insbesondere auch Zinn-Silber-Legierungen, da diese zu den sehr guten Kontaktwerkstoffen zählen.

Durch die europäische Patentschrift 0 443 291 B1 ist es bekannt, bei einem elektrischen Steckverbinderpaar den Basiswerkstoff eines Steckerelements mit Reinzinn oder einer Zinn-Blei-Legierung zu beschichten, während das andere Steckerelement eine auf schmelzflüssigem Wege aufgebrachte härtere Oberflächenbeschichtung aus einer Legierung aufweist, die bis zu 10 Gew.-% Silber enthält. Neben Silber werden noch eine Reihe weiterer Legierungsmetalle vorgeschlagen. Dieser Ansatz ist richtungsweisend für die Herstellung qualitativ hochwertiger Steckverbinder mit gleichbleibend niedrigem Kontaktwiderstand und möglichst geringen Steck- und Ziehkräften.

Der Vorschlag gemäß DE 44 43 461 C1 sieht eine schmelzflüssig aufgebrachte Oberflächenbeschichtung aus einer Zinnlegierung vor, die bis zu 5 Gew.-% Kobalt enthält. Neben Kobalt kann die Zinnlegierung auch Wismut und Indium sowie eine Vielzahl weiterer Legierungselemente enthalten.

Die DE 36 28 783 C2 offenbart ein elektrisches Verbindungsstück aus einer Kupferlegierung, die 0,3 bis 2 Gew.-% Magnesium sowie 0,001 bis 0,1 Gew.-% Phosphor aufweist. Die elektrischen Verbindungsstücke zeichnen sich durch ihre Festigkeit, ihre elektrische Leitfähigkeit und Spannungsrelaxationseigenschaften bei erhöhten Temperaturen aus. Sie zeigen befriedigende Gebrauchseigenschaften, selbst wenn sie in kompakter Größe und komplizierter Form hergestellt sind.

Zum Stand der Technik zählt durch die DE 43 38 769 A1 auch eine Kupferlegierung zur Herstellung von elektrischen Steckverbindern mit einer Zusammensetzung von im wesentlichen 0,5 bis 3 Gew.-% Nickel, 0,1 bis 0,9 Gew.-% Zinn, 0,08 bis 0,8 Gew.-% Silizium, 0,1 bis 3 Gew.-% Zink, 0,007 bis 0,25 Gew.-% Eisen, 0,001 bis 0,2 Gew.-% Phosphor sowie 0,001 bis 0,2 % Magnesium mit dem Hauptbestandteil Kupfer als Rest einschließlich der unvermeidbaren Verunreinigungen.

Die bekannten Metallbänder bzw. die Steckverbinder hieraus haben sich in der Praxis bewährt. Jedoch steigen zunehmend die technischen und qualitativen Anforderungen der Kontaktbauteile hinsichtlich der mechanischen und elektrischen Eigenschaften. Dies gilt insbesondere beim Einsatz der Kontaktbauteile unter schwierigen oder aggressiven Umgebungsbedingungen, beispielsweise für Steckverbinder in der Kraftfahrzeugelektrik und hier vor allem in der Motorelektronik. Unter solch schwierigen Einsatzbedingungen können Anforderungen auftreten vor allem hinsichtlich Temperaturbeständigkeit, Relaxationsbeständigkeit, Korrosionsfestigkeit und Haftfestigkeit der Beschichtung, bei denen die bekannten Kontaktbauteile an ihre Grenze stoßen. Es kann dann zum Abblättern (Peeling) der Oberflächenbeschichtung kommen.

Der Erfindung liegt ausgehend vom Stand der Technik die Aufgabe zugrunde, ein elektrisch leitfähiges Metallband zur Fertigung von elektrischen Kontaktbauteilen, insbesondere von Steckverbindern, zu schaffen mit guten elektrischen und mechanischen Eigenschaften bei Verbesserung der Haftung zwischen Basiswerkstoff und Beschichtung, welches zudem ökonomisch vorteilhaft ist.

Die Lösung dieser Aufgabe besteht nach der Erfindung in einem elektrisch leitfähigen Metallband nach Anspruch 1 sowie einem hieraus hergestellten Steckverbinder nach Anspruch 6.

Danach besteht der Basiswerkstoff aus einer Kupferlegierung mit Nickelanteilen zwischen 1,0 und 4,0 Gew.-%, Siliziumanteilen von 0,08 bis 1,0 Gew.-%, Zinnanteilen zwischen 0,02 und 1,0 Gew.-%, Zinkanteilen von 0,01 bis 2,0 Gew.-%, Zirkoniumanteilen von 0,005 bis 0,2 Gew.-% und Silberanteilen zwischen 0,02 bis 0,5 Gew.-%, wobei die Beschichtung aus einer Zinn-Silber-Legierung besteht mit einem Silberanteil zwischen 1,0 und 3,8 Gew.-%.

Besonders positive Ergebnisse wurden in Versuchen mit einem Basiswerkstoff erzielt aus einer Kupferlegierung mit Anteilen von Nickel zwischen 1,4 und 1,7 Gew.-%, Silizium von 0,2 bis 0,35 Gew.-%, Zinn zwischen 0,02 und 0,3 Gew.-%, Zink von 0,01 bis 0,3 Gew.-%.

Durch den Zinnanteil im Basiswerkstoff sinkt an sich dessen Leitfähigkeit, jedoch steigt hierdurch die Festigkeit und Zähigkeit. Die Abnahme der Leitfähigkeit wird durch die Zulegierung von Silber kompensiert. Der Hauptzweck des Silberanteils besteht darin, als Matrixkomponente unter Temperatureinfluß an Diffusionsvorgängen mit dem Beschichtungswerkstoff teilzunehmen und die zu erwartende diffusionsgesteuerte Phasenbildung intermetallischer Verbindungen zu beeinflussen. Der Silberanteil liegt daher im Basiswerkstoff zwischen 0,02 Gew.-% und 0,5 Gew.-%, wohingegen die Beschichtung einen Silberanteil zwischen 1 Gew.-% und 3,8 Gew.-% aufweist.

Bevorzugt beträgt der Silbergehalt des Basiswerkstoffs 0,05 Gew.-% bis 0,2 Gew.-% (Anspruch 2). Der Silbergehalt in der Beschichtung liegt bevorzugt zwischen 1,2 Gew.-% und 2,5 Gew.-% (Anspruch 3). Dies führt zu einem niedrigen Übergangswiderstand.

Das Zirkonium in einem Anteil zwischen 0,005 Gew.-% und 0,2 Gew.-%, bevorzugt jedoch bis zu 0,05 Gew.-%, im Basiswerkstoff steigert die Korrosions- und Temperaturbeständigkeit und verbessert die Warmformbarkeit.

Das erfindungsgemäße Metallband zeichnet sich zunächst durch seine guten elektrischen und mechanischen Eigenschaften aus, insbesondere durch seine gute Leitfähigkeit und Relaxationsbeständigkeit bei guter Umformbarkeit sowie Ablösebeständigkeit der Beschichtung. Ein stabiler Kontaktübergangswiderstand ist sichergestellt. Das Metallband weist eine hohe Temperaturbeständigkeit mit niedrigem Übergangswiderstand auf. Es ist abrieb- und durchriebfest bei höherer Härte, dennoch ist es gut verformbar und gut lötbar. Die Steck- und Ziehkräfte sind niedrig bei verbesserter Reibkorrosionsbeständigkeit.

Darüber hinaus ist das Metallband ökonomisch vorteilhaft, da bei dessen Herstellung Kupferschrott mit Zinnanteilen eingesetzt werden kann. Im Stoffkreislauf wird eine ausgeglichene Zinnbilanz erreicht. Hierdurch kann eine gleichbleibende Qualität der unter Schrotteinsatz hergestellten Metallbänder sichergestellt werden. Durch eine Abstimmung des Einsatzes von blankem Schrott (CuNiSi-Werkstoff), verzinntem Schrott und Neumetall (Kupfer) kann je nach Stärke der Zinnauflage des verzinnten Schrotts ein Basiswerkstoff als Gießprodukt gewonnen werden mit einem Zinngehalt von 0,02 bis 1 Gew.-%. Verfahrensvorteilhaft sind Gießprodukte mit einem Zinngehalt zwischen 0,25 und 0,5 Gew.-%.

Die intermetallische Phase zwischen dem Basiswerkstoff und der Beschichtung ist feinkörnig und gleichmäßig. Hieraus resultieren eine gute Umformbarkeit, insbesondere Biegbarkeit, höhere Scherfestigkeiten und geringe Elastizitätsmodule sowie eine hohe Kriechbeständigkeit des erfindungsgemäßen Metallbands.

Die Legierungsbestandteile Zink und Silber beeinflussen das Diffusionsverhalten in der intermetallischen Phase zwischen dem Basiswerkstoff und der Beschichtung aus Zinn-Silber. Die zwangsläufig durch Diffusion von Kupfer in die Zinnschicht entstehenden Kupfer-Zinn-Phasen werden in ihrer Ausprägung über Temperatur und Zeit im Sinne einer Verlangsamung und Behinderung der Bildung speziell der sogenannten ε-Phase beeinflußt. Hierdurch wird eine wesentlich bessere Festigkeit zwischen Basiswerkstoff und Beschichtung gewährleistet. Damit werden Ablöseerscheinungen, insbesondere das Abblättern (Peeling), der Beschichtung auch bei ungünstigen und schwierigen Einsatzbedingungen des Metallbands bzw. der hieraus hergestellten Steckverbinder zu größeren Tempreaturen und längeren Zeiten verschoben.

Wesentliche Ursache für ein mögliches alterungsbedingtes Versagen der Beschichtung gerade bei Temperaturen über 150°C ist eine überproportional schnelle Umwandlung der sogenannten η-Phase (Cu₆Sn₅) in die ε-Phase (Cu₃Sn) hinein bei der Ausbildung, ausgehend von der Phasengrenze zwischen Basiswerkstoff und Beschichtung aufgrund hoher Diffusionsgeschwindigkeiten. Die Erfindung macht sich nunmehr die Erkenntnis zu eigen, daß das Vorhandensein der -Phase allein nicht notwendigerweise zu Ablösevorgängen an der Grenze zwischen Basiswerkstoff und Beschichtung führt, auch nicht bei einem durch den Umformvorgang hervorgerufenen Spannungszustand eines Steckverbinders. Wird die Ausprägung der ε-Phase unterbunden oder behindert, wirkt sich dies positiv auf die intermetallische Phase und Langzeitbeständigkeit der Beschichtung aus.

Zink und Silber sowie das im Basiswerkstoff vorliegende Nickel sind in ihren erfindungsgemäß vorgesehenen Anteilen geeignet, beim Diffusionsvorgang und ihrer Teilnahme an der Bildung der intermetallischen Phase speziell durch Anreicherung in der Phasengrenze die schnelle Umwandlung von der η-Phase zur ε-Phase zu unterdrücken bzw. wesentlich zu verlangsamen mit dem Erfolg eines homogenen hochhaftenden Verbunds zwischen Basiswerkstoff und Beschichtung.

Fügt man der Beschichtungslegierung noch Indium hinzu, und zwar bis zu 10 Gew.-%, vorzugsweise jedoch zwischen 0,1 Gew.-% und 5 Gew.-%, wie dies Anspruch 4 vorsieht, wird zwar der Schmelzpunkt erniedrigt, jedoch insgesamt die Beständigkeit gegen äußere Bedingungen verbessert. Zusätzlich werden die Löteigenschaften durch die Zulegierung von Indium positiv beeinflußt.

Magnesium erhöht die Festigkeit und die Spannungsrelaxationseigenschaft bei erhöhter Temperatur der Legierung bei nur geringfügiger Beeinträchtigung der elektrischen Leitfähigkeit, die auf dem Hauptbestandteil Kupfer beruht. Magnesium löst sich in der Kupfermatrix und ist gemäß Anspruch 5 im Basiswerkstoff in einem Anteil bis zu 0,1 Gew.-% vorgesehen. Des Weiteren kann der Basiswerkstoff danach Phosphor bis zu einem Anteil von 0,05 Gew.-% enthalten. Das Phosphor wirkt als Desoxidant und zusammen mit Magnesium zur Erhöhung der Festigkeit und der Spannungsrelaxationseigenschaft bei erhöhten Temperaturen. Die Phosphorkomponente trägt auch zur Erhaltung der Federkraft des Metallbands bei Umformvorgängen bei.

Eine Verbesserung der Umformbarkeit und auch der Warmwalzbarkeit kann durch einen Eisenanteil bis zu 0,1 Gew.-% erreicht werden. Die Eisenkomponente verringert zudem die Korngröße bei Ausfällungen der Nickel- und Siliziumverbindungen und wirkt der Ausbildung einer Rißstruktur entgegen, was wiederum positiv für die Haftfestigkeit zwischen Basiswerkstoff und Beschichtung ist.

## Patentansprüche

1. Elektrisch leitfähiges Metallband zur Fertigung von elektrischen Kontaktbauteilen, insbesondere von Steckverbindern, mit einem Basiswerkstoff aus einer Kupferlegierung, welcher eine schmelztechnisch aufgebrachte metallische Beschichtung aus einer Zinn-Silber-Legierung aufweist, wobei zwischen dem Basiswerkstoff und der Beschichtung eine intermetallische Phase ausgebildet ist, **dadurch gekennzeichnet, daß** der Basiswerkstoff - in Gewichtsprozent ausgedrückt - besteht aus
| | |
|---|---|
| Nickel (Ni) | 1,0 % bis 4,0 % |
| Silizium (Si) | 0,08 % bis 1,0 % |
| Zinn (Sn) | 0,02% bis 1.0% |
| Zink (Zn) | 0,01 % bis 2,0 % |
| Zirkonium (Zr) | 0,005 % bis 0,2 % |
| Silber (Ag) | 0,02 % bis 0,5 % |
| Wahlweise Magnesium (mg) | ≤0.1 |
| Phosphor (P) | ≤ 0.05 |
| Eisen (Fe) | ≤ 0.1 |
Rest Kupfer einschließlich erschmelzungsbedingter Verunreinigungen, und die Beschichtung aus einer Zinn-Silber-Legierung mit einem Silberanteil zwischen 1 Gew.-% und 3,8 Gew.-% und wahlweise ≤ 10 Gew.% Indium besteht.

2. Metallband nach Anspruch 1, **dadurch gekennzeichnet, daß** der Silbergehalt des Basiswerkstoffs 0,05 Gew.-% bis 0,2 Gew.-% beträgt.

3. Metallband nach Anspruch 1 oder 2, **dadurch gekennzeichnet, daß** der Silbergehalt der Beschichtung zwischen 1,2 Gew.-% und 2,5 Gew.-% liegt.

4. Metallband nach einem der Ansprüche 1 bis 3, **dadurch gekennzeichnet, daß** die Beschichtung bis zu 10 Gew.-%, vorzugsweise zwischen 0,1 Gew.-% und 5 Gew.-% Indium enthält.

5. Metallband nach einem der Ansprüche 1 bis 4, **dadurch gekennzeichnet, daß** der Basiswerkstoff bis zu 0,1 Gew.-% Magnesium (Mg), bis zu 0,05 Gew.-% Phosphor (P) und/oder bis zu 0,1 Gew.-% Eisen (Fe) enthält.

6. Steckverbinder aus einem Metallband nach einem der Ansprüche 1 bis 5.

## Claims

1. Electrically conductive metal strip for the manufacture of electrical contact components, in particular connectors, with a base material consisting of a copper alloy which exhibits a metallic coating consisting of a tin and silver alloy applied using a molten form, an intermetallic phase being formed between the base material and the coating, **characterised in that** expressed as a percentage by weight, the base material consists of
| | |
|---|---|
| nickel (Ni) | 1.0% to 4.0% |
| silicon (Si) | 0.08% to 1.0% |
| tin (Sn) | 0.02% to 1.0% |
| zinc (Zn) | 0.01% to 2.0% |
| zirconium (Zr) | 0.005% to 0.2% |
| silver (Ag) | 0.02% to 0.5% |
| optionally magnesium (Mg) | ≤ 0.1 |
| phosphorus (P) | ≤ 0.05 |
| iron (Fe) | ≤ 0.1 |
with the remainder copper including impurities due to melting, and the coating consisting of a tin and silver alloy with a silver content of between 1% by weight and 3.8% by weight and optionally *≤* 10% by weight of indium.

2. Metal strip according to claim 1, **characterised in that** the silver content of the base material is 0.05% by weight to 0.2% by weight.

3. Metal strip according to claim 1 or 2, **characterised in that** the silver content of the coating lies between 1.2% by weight and 2.5% by weight.

4. Metal strip according to one of claims 1 to 3, **characterised in that** the coating contains up to 10% by weight, preferably between 0.1% by weight and 5% by weight, of indium.

5. Metal strip according to one of claims 1 to 4, **characterised in that** the base material contains up to 0.1% by weight of magnesium (Mg), up to 0.05% by weight of phosphorus (P) and/or up to 0.1% by weight of iron (Fe).

6. Connector made of a metal strip according to one of claims 1 to 5.

## Revendications

1. Bande métallique électroconductrice pour la fabrication de composants électriques de contact, en particulier de connecteurs à fiches, comportant un matériau de base constitué d'un alliage de cuivre qui présente un revêtement métallique en un alliage étain-argent, appliqué par technique de fusion, une phase intermétallique étant formée entre le matériau de base et le revêtement,
**caractérisée en ce que**
le matériau de base - exprimé en pourcentages de poids - est constitué de
| | |
|---|---|
| Nickel (Ni) | 1,0 % à 4,0 % |
| Silicium (Si) | 0,08 % à 1,0 % |
| Etain (Sn) | 0,02 % à 1,0 % |
| Zinc (Zn) | 0,01 % à 2,0 % |
| Zirconium (Zr) | 0,005 % à 0,2 % |
| Argent (Ag) | 0,02 % à 0,5 % |
| optionnellement | |
| Magnésium (Mg) | = 0,10 % |
| Phosphore (P) | ≤ 0,05 % |
| Fer (Fe) | ≤ 0,10 % |
le reste étant du cuivre, y compris les impuretés dues à la fusion, et le revêtement est constitué d'un alliage étain-argent avec une proportion d'argent entre 1 % en poids et 3,8 % en poids, et optionnellement ≤ 10 % en poids d'indium.

2. Bande métallique selon la revendication 1,
**caractérisée en ce que**
la teneur en argent du matériau de base est de 0,05 % en poids à 0,2 % en poids.

3. Bande métallique selon la revendication 1 ou 2,
**caractérisée en ce que**
la teneur en argent du revêtement se situe entre 1,0 % en poids et 2,5 % en poids.

4. Bande métallique selon l'une des revendications 1 à 3,
**caractérisée en ce que**
le revêtement contient jusqu'à 10 % en poids, de préférence entre 0,1 % en poids et 5 % en poids d'indium.

5. Bande métallique selon l'une des revendications 1 à 4,
**caractérisée en ce que**
le matériau de base contient jusqu'à 0,1 % en poids de magnésium (Mg), jusqu'à 0,05 % en poids de phosphore (P), et/ou jusqu'à 0,1 % en poids de fer (Fe).

6. Connecteur à fiche en une bande métallique selon l'une des revendications 1 à 5.
